Europäisches Patentamt

(19) European Patent Office

Office européen des brevets

(11) Numéro de publication: **0 019 514 B1**

(12) **FASCICULE DE BREVET EUROPEEN**

(45) Date de publication du fascicule du brevet:
22.08.84

(21) Numéro de dépôt: **80400593.2**

(22) Date de dépôt: **29.04.80**

(51) Int. Cl.³: **G 11 B 23/02**

(54) Boîte perfectionnée pour le conditionnement d'une minicassette ou autre.

(30) Priorité: **14.05.79 FR 7912220**

(43) Date de publication de la demande:
**26.11.80 Bulletin 80/24**

(45) Mention de la délivrance du brevet:
**22.08.84 Bulletin 84/34**

(84) Etats contractants désignés:
**AT BE CH DE GB IT LI NL SE**

(56) Documents cités:
**FR - A - 1 319 370**
**FR - A - 2 189 811**
**FR - A - 2 297 478**
**FR - A - 2 307 172**
**GB - A - 993 636**
**US - A - 3 285 464**
**US - A - 3 532 211**
**US - A - 3 893 566**
**US - A - 3 978 985**
**US - A - 4 034 885**

(73) Titulaire: **Posso, Patrick, 10, Avenue Jurigoz, CH 1006 - Lausanne (CH)**

(72) Inventeur: **Posso, Patrick, 10, Avenue Jurigoz, CH 1006 - Lausanne (CH)**

(74) Mandataire: **Caunet, Jean et al, Cabinet BEAU DE LOMENIE 55, rue d'Amsterdam, F-75008 Paris (FR)**

**Description**

La présente invention concerne une boîte perfectionnée pour le conditionnement d'une minicassette ou autre moyen de stockage d'informations à deux bobines.

Le brevet français 2 189 811 décrit une boîte de ce type comportant, d'une part, un premier élément moulé en matière plastique qui présente une paroi faciale solidaire de chants constituant deux rebords latéraux réunis par une base, d'autre part, un deuxième élément également moulé en matière plastique qui présente une paroi faciale, solidaire d'un dosseret et de rebords latéraux s'étendant contre les rebords latéraux du premier élément relativement auxquels ils sont articulés, des moyens de verrouillage élastique reliant les rebords des deux éléments à leurs extrémités ouvrantes.

Le deuxième élément ou corps ne présente qu'un dosseret partiel destiné, en position de fermeture de la boîte, à prolonger un autre dosseret partiel solidaire de la paroi faciale et des rebords du premier élément ou couvercle. Par ailleurs, les rebords du corps comportent en saillie interne des ergots pénétrant normalement dans des fentes inclinées de l'arrière en bas vers l'avant en haut, ces fentes étant ménagées en creux à l'extérieur des rebords du couvercle. Ces ergots et fentes coopèrent entre eux afin de constituer, non pas un système de pivotement pur, mais un système de basculement grâce auquel le couvercle, en baîllant lors de l'ouverture de la boîte, bascule vers l'avant et vers le haut pour éjecter la cassette.

Un premier inconvénient de cette boîte connue est que l'étanchéité aux poussières est approximative; cela est dû au fait que le basculement du couvercle vers la fermeture n'est pas reproductible de façon fidèle quelle que soit la précision de moulage et de montage; il en résulte que le contact entre les dosserets n'est pas parfait et qu'il en est de même pour celui de la base du couvercle avec la paroi faciale du corps; dans ces conditions, il existe toujours du jeu à ces endroits lorsque la boîte est fermée et les poussières peuvent par conséquent pénétrer dans la boîte par ces fines lumières, d'autant plus aisément qu'un effet d'attraction électrostatique est produit par la bande magnétique. D'ailleurs la partie apparente de celle-ci se trouve située juste derrière la lumière antérieure.

Outre, les ergots et les fentes précités, les rebords du couvercle comportent en saillie externe postérieure des bossages destinés à coopérer avec des évidements ménagés en creux à l'intérieur des rebords du corps; ces bossages et évidements coopèrent entre eux pour verrouiller le couvercle dans le corps en position de fermeture. Le verrouillage est encore renforcé pour rendre le basculement plus impulsif par des ergots de verrouillage antérieur venus en saillie interne sur les rebords du corps et coopérant avec des gorges ménagées en creux à l'extérieur des rebords du couvercle.

Un deuxième inconvénient de cette boîte connue, réside dans la complexité de la fabrication du couvercle et du corps pour faire venir le moulage sans risque de casse au démoulage notamment les éléments précités, sans compter ceux qui n'ont pas été rappelés ci-dessus. Pour le corps, il s'agit de faire venir en saillie interne les ergots de basculement et les ergots de verrouillage antérieur, ainsi qu'en creux interne les évidements de verrouillage postérieur; pour le couvercle, il s'agit de faire venir en saillie externe les bossages de verrouillage postérieur, ainsi qu'en creux externe les fentes de basculement et les gorges de verrouillage antérieur. Dès lors, le moule du corps doit être en plusieurs parties: une partie femelle et une partie mâle s'emboîtant mutuellement et se déplaçant relativement l'une à l'autre dans une direction principale d'éloignement ou de rapprochement, ainsi que des parties latérales guidées dans la partie mâle dans une direction secondaire perpendiculaire à la principale pour délimiter les éléments saillants et creux précités; le moule du couvercle est également en plusieurs parties, les parties latérales étant par contre guidées dans la partie femelle.

En outre, les gorges creuses de verrouillage antérieur sont courbes et s'évasent vers le bas, étant donné que le basculement du couvercle n'est pas maîtrisé avec une précision géométrique suffisante, ceci expliquant le manque d'étanchéité à la fermeture exposé dans ce qui précède.

La présente invention a pour but de remédier à ces inconvénients et vise, d'une part, à améliorer l'étanchéité et, d'autre part, à simplifier la fabrication.

Pour atteindre ce but et conformément à l'invention, le premier élément est opaque et comporte une partie antérieure et une partie postérieure reliées entre elles, d'une façon connue en soi, par une charnière venue de moulage et s'étendant dans la paroi faciale parallèlement à la base, en se prolongeant à travers les rebords latéraux par des fentes séparatrices, la partie antérieure opaque et le deuxième élément qui est transparent étant reliés entre eux par des moyens de fixation rigide éventuellement démontables pour former un corps rigide.

Suivant une forme de réalisation particulièrement avantageuse, le moyen de fixation rigide comporte, d'une façon connue en soi, d'une part, au moins une dent de clipage ayant une rampe inclinée qui se termine par un épaulement d'arrêt et coopère pour son verrouillage avec une fenêtre et, d'autre part, un dispositif conjugué de butée latérale intervenant lors du coulissement de clipage et s'opposant au déboîtement de la dent considérée, le dispositif conjugué de butée latérale étant constitué par au moins une languette saillante, prolongeant de chaque côté le rebord de l'un des éléments et coopérant par pénétration lors dudit coulissement dans une lumière ménagée en regard dans la face de l'élément opposé au précédent, ce dispositif étant suffisamment éloigné, dans la direction de ce coulissement, du couple: dent-fenêtre pour permettre une fixation des rebords étendue sur toute leur hauteur.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin:

— la fig. 1 est une perspective montrant, en vue synoptique de montage, la boîte perfectionnée selon l'invention,

— la fig. 2 est une coupe longitudinale de la boîte prise suivant la ligne II–II de la fig. 1,

— la fig. 3 est une vue de détail agrandie illustrant le clipage de la fig. 2,

— la fig. 4 est une coupe transversale partielle de la charnière, prise suivant la ligne IV–IV de la fig. 1,

— la fig. 5 est une coupe longitudinale partielle du verrouillage du couvercle, prise à plus grande échelle suivant la ligne V–V de la fig. 1.

Ainsi que cela ressort du dessin, la boîte comporte un élément transparent 1 fabriqué par moulage en un polystyrène cristal par exemple et un élément opaque 2 également fabriqué par moulage, mais en un polypropylène ou autre matière plastique.

L'élément transparent 1 présente une paroi faciale 3 solidaire d'un dosseret 4 et de deux rebords latéraux 5 et 6, constituant trois chants apparents de la boîte.

L'élément opaque 2 présente une paroi faciale 7, monolithique mais dans laquelle une rainure d'affaiblissement est marquée en creux afin de définir une charnière 8 reliant une plage antérieure 9 à une plage postérieure 10.

La plage antérieure de paroi 9 est pourvue de deux rebords latéraux 11 et 12 destinés à être appliqués de l'intérieur contre les rebords latéraux 5 et 6 de l'élément transparent 1, en butant contre le dosseret 4 de celui-ci. Normalement, ces rebords 5 et 11, 6 et 12 sont solidarisés entre eux par tous moyens appropriés; dans cette position, l'élément transparent 1 et la partie antérieure opaque conjuguée 9, 11, 12 constituent le corps de la boîte dans lequel une minicassette peut être glissée et ainsi rangée. Dans cette même position et pour rigidifier le corps, une bordure saillante 13 de la plage antérieure de paroi 9 recouvre la tranche apparente d'un dégagement marginal 14 du dosseret 4.

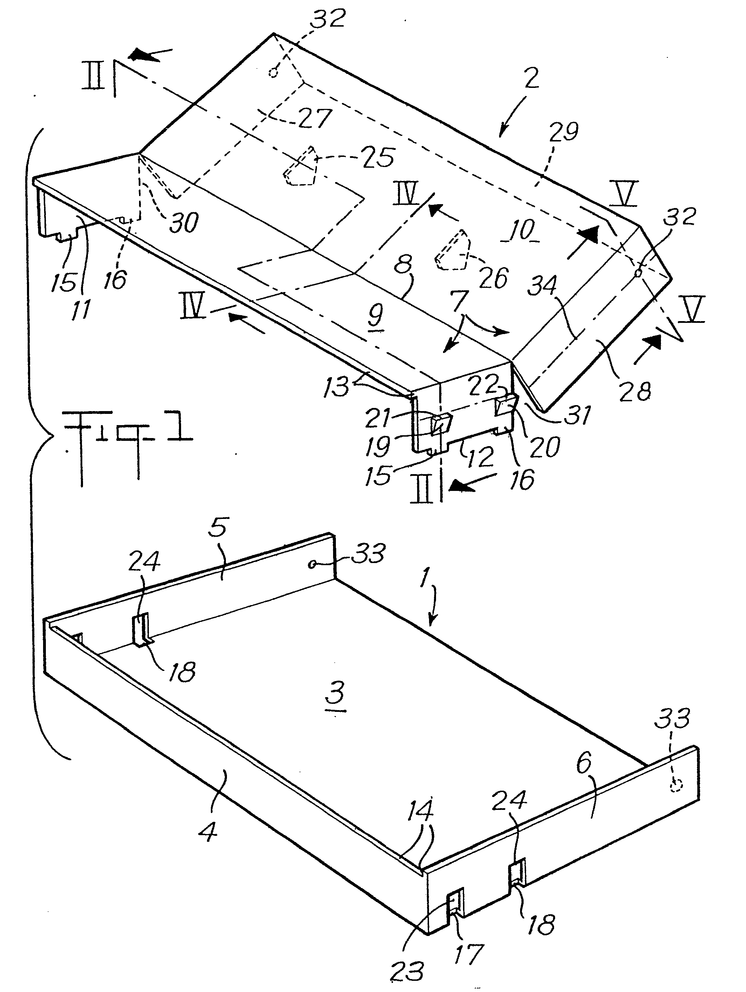

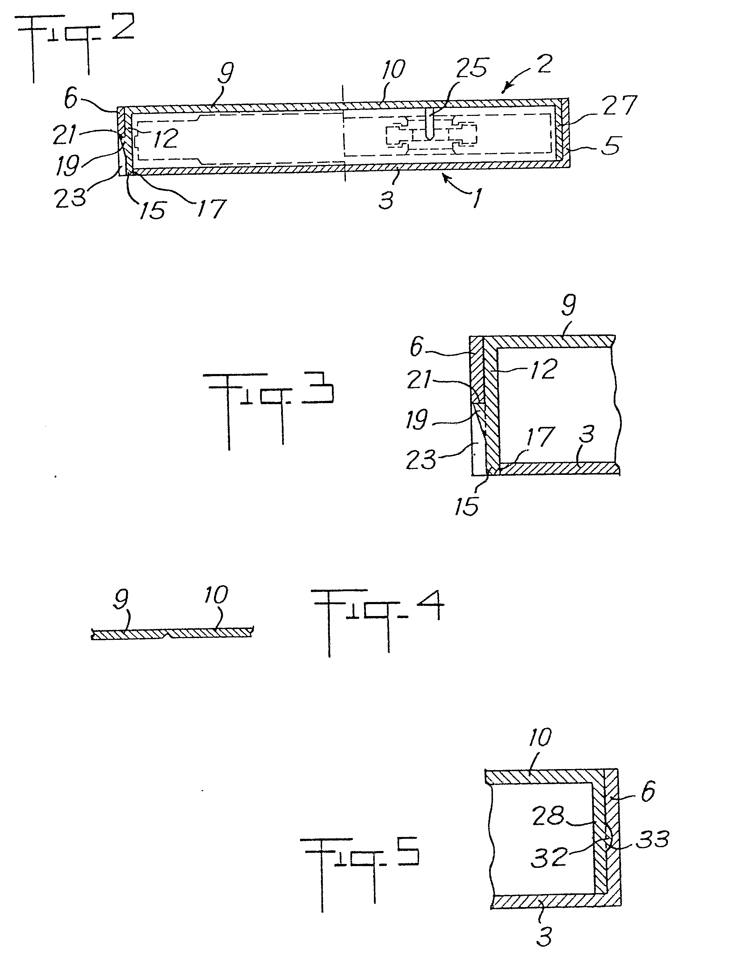

Dans l'exemple représenté, la solidarisation de la partie antérieure opaque 9, 11, 12 avec l'élément transparent 1 est obtenue, pour constituer le corps, par clipage (fig. 1 et 3). Dans cet exemple, chacun des rebords 11 et 12 de cette partie antérieure opaque présente en saillie, sur sa tranche deux languettes de centrage 15 et 16 destinées à pénétrer dans des lumières 17 et 18 respectivement, ménagées dans la paroi faciale 3 de l'élément transparent 1 près du rebord contigu 5 ou 6; d'autre part, chacun de ces rebords 11 et 12 de la partie antérieure opaque présente en saillie, sur sa face extérieure, deux dents de clipage 19 et 20 dont les rampes inclinées sont en pente montante vers la plage de paroi 9 et s'épaississent, par conséquent, progressivement dans cette direction pour se terminer par des épaulements d'arrêt 21 et 22, ces dents coopérant avec des fenêtres 23 et 24 ménagées dans le rebord correspondant 5 ou 6 de l'élément transparent 1; de préférence, les dents 19 et 20 sont situées en regard des languettes 15 et 16, ce qui permet de faire communiquer les fenêtres 23 et 24 avec les lumières 17 et 18 et par suite de les réaliser plus facilement par moulage. Bien entendu, une seule dent et une seule languette peuvent être prévues sur le rebord 12 et de même en ce qui concerne le rebord 11; par ailleurs, les languettes peuvent être scellables auquel cas les dents peuvent être supprimées; d'autre part, les dents peuvent être à action bidirectionnelle et, dès lors, les languettes ne sont plus indispensables. Cependant, la réalisation décrite en se référant au dessin semble bien être la plus avantageuse, non seulement du point de vue de l'efficacité mais également du point de vue de la simplification de la fabrication comme cela est exposé dans ce qui suit.

La plage postérieure de paroi 10 est solidaire de doigts 25 et 26 susceptibles de pénétrer dans les moyeux crantés des bobines pour les immobiliser; elle est également solidaire de chants constituant deux rebords latéraux 27, 28 et une base 29 les réunissant. Des fentes 30 et 31 prolongent la charnière 8 et séparent les rebords 11 et 12 de la partie antérieure opaque, des rebords 27 et 28 de la partie postérieure opaque. Dès lors, cette partie postérieure constitue un couvercle pivotant qui, lorsqu'il est ouvert, libère la minicassette en permettant son extraction, puis son remplacement et, lorsqu'il est fermé, emprisonne ladite minicassette en immobilisant les bobines de celle-ci grâce aux doigts 25 et 26; la conformation de la boîte est telle que le couvercle ne peut pas pincer les doigts de l'utilisateur.

Par ailleurs, des moyens de verrouillage élastique assurent le maintien du couvercle 10, 25 à 29 en position de fermeture du corps 1, 3 à 9 et 11 à 24. Dans l'exemple représenté, ces moyens sont constitués par des bossettes 32 venues de moulage en saillie sur les rebords 27 et 28 de la partie opaque postérieure, c'est-à-dire du couvercle, vers l'extérieur et à proximité de la base 29; ces bossettes coopèrent avec des logements 33 ménagés en regard dans les rebords 5 et 6 de l'élément transparent 1, c'est-à-dire du corps.

Il est important de remarquer que le moule de l'élément opaque 2 est en deux parties seulement; mais le plan de joint 34 de ces parties affleure les épaulements 21, 22 des dents de clipage, s'étend parallèlement à la paroi faciale 7 et traverse par leur milieu les bossettes 32.

La boîte, objet de l'invention, est applicable au conditionnement des minicassettes ou autres moyens de stockage d'informations à deux bobines, dans les domaines de l'enregistrement sonore, vidéo, informatique, etc.

## Revendications

1. Boîte perfectionnée pour le conditionnement d'une minicassette ou autre moyen de stockage d'informations à deux bobines, cette boîte comportant, d'une part, un premier élément moulé en matière plastique qui présente une paroi faciale solidaire de chants constituant deux rebords latéraux réunis par une base, d'autre part, un deuxième élément également moulé en matière plastique qui présente une paroi faciale, solidaire d'un dosseret et de rebords latéraux s'étendant contre les rebords latéraux du premier élément relativement auxquels ils sont articulés, des moyens de verrouillage élastique reliant les rebords des deux éléments à leurs extrémités ouvrantes caractérisée:

– en ce que le premier élément est opaque et comporte une partie antérieure (9) et une partie postérieure (10), reliées entre elles, d'une façon connue en soi, par une charnière (8) venue de moulage et s'étendant dans la paroi faciale parallèlement à la base (29), en se prolongeant à travers les rebords latéraux par des fentes séparatrices (30, 31),

– et en ce que la partie antérieure opaque (9) et le deuxième élément (1) qui est transparent sont reliés entre eux par des moyens de fixation rigide éventuellement démontables (15 à 24) pour former un corps rigide.

2. Boîte selon la revendication 1, caractérisée en ce que le moyen de fixation rigide comporte, d'une façon connue en soi, d'une part, au moins une dent de clipage (19 à 22) ayant une rampe inclinée qui se termine par un épaulement d'arrêt et coopère pour son verrouillage avec une fenêtre (23, 24) et, d'autre part, un dispositif conjugué de butée latérale intervenant lors du coulissement de clipage et s'opposant au déboîtement de la dent considérée et en ce que le dispositif conjugué de butée latérale est constitué par au moins une languette saillante (15, 16) prolongeant de chaque côté le rebord de l'un des éléments et coopérant par pénétration lors dudit coulissement dans une lumière (17, 18) ménagée en regard dans la face de l'élément opposé au précédent, ce dispositif étant suffisamment éloigné, dans la direction de ce coulissement, du couple: dent-fenêtre pour permettre une fixation des rebords étendue sur toute leur hauteur.

## Claims

1. Improved case for packing a tape cassette or other means for storing information of the twinreel type, this case comprising, on the one hand, a first moulded element in plastic material which has a front wall integral with edges portion constituting two side walls connected by a front edge portion, on the other hand, a second element equally moulded in plastic material which has a front wall, integral with a rear wall and with side walls extending against the side walls of the first element and pivoted with respect thereto, elastic locking means connecting the side walls of the two elements to their opening ends, characterized:

– in that the first element is opaque and comprises a front portion (9) and a rear portion (10) connected together in a manner known per se, by a hinge (8) moulded therewith and extending in the top parallel to the front edge portion (29), continuing through the side walls by separating slits (30, 31),

– in that the rear opaque portion (9) and the second element (1) which is transparent are connected together by possibly dismountable rigid connecting means (15 to 24) to form a rigid body.

2. Case according to claim 1, characterized in that the rigid connecting means comprises in a manner known per se, on the one hand, a clipping tooth (19 to 22) with an inclined ramp which terminates in a stop shoulder and cooperates, for locking thereof, with a window (23, 24) and, on the other hand, a conjugate device of lateral abutment acting during the sliding motion of the clipping and opposing to the disjunction of the tooth in question, and in that the conjugate device of lateral abutment is constituted by at least a projecting tongue (15, 16) and extending on each side the side wall of one of the elements and cooperating by penetration during said sliding motion in a slot (17, 18) made thereopposite in the face of the element opposite the preceding element, this device being sufficiently remote in the direction of the sliding motion of the couple: tooth-window to enable a fixing of the side walls over their whole height.

## Patentansprüche

1. Verbesserter Behälter zum Aufbewahren einer Minikassette oder eines anderen Mittels zur Speicherung von Informationen mit zwei Spulen, welcher Behälter einerseits ein erstes aus Plastikmaterial gegossenes Element umfasst, das eine Stirnwand aufweist, die mit zwei durch eine Basis miteinander verbundene seitliche Borde bildenden Schmalseiten verbunden ist, und anderseits ein zweites ebenfalls aus Plastikmaterial gegossenes Element, das eine Stirnwand aufweist, die mit einer Rückwand und mit sich gegen die seitlichen Borde des ersten Elements erstreckenden und gegenüber diesen gelenkigen seitlichen Borden verbunden ist, wobei Mittel zur elastischen Verriegelung die Borde der beiden Elemente an ihren öffnenden Enden verbinden, dadurch gekennzeichnet,

– dass das erste Element undurchsichtig ist und einen vorderen Teil (9) und einen hinteren Teil (10) umfasst, welche auf an sich bekannte Weise durch ein beim Giessen entstandenes Scharnier (8) miteinander verbunden sind, welches in der Stirnwand parallel zur Basis (29) verläuft und sich durch die seitlichen Borde in Trennschlitzen (30, 31) fortsetzt,

– und dass der undurchsichtige vordere Teil (9) und das zweite Element (1), welches durchsichtig ist, zwecks Bildung eines starren Körpers durch gegebenenfalls demontierbare Mittel zur starren Fixierung (15 bis 24) miteinander verbunden sind.

2. Behälter nach Anspruch 1, dadurch gekennzeichnet, dass das Mittel zur starren Fixierung in an sich bekannter Weise einerseits zumindest einen Rastzahn (19 bis 22) mit einer geneigten, in einer Sperrschulter endenden und zu seiner Verriegelung mit einem Fenster (23, 24) zusammenwirkenden Rampe und anderseits eine zugehörige seitliche Anschlageinrichtung umfasst, die bei der Einrastbewegung zum Wirken kommt und sich dem Herausspringen des betreffenden Zahns entgegensetzt, und dass die zugehörige seitliche Anschlageinrichtung durch zumindest eine vorspringende Zunge (15, 16) gebildet ist, die den Bord eines der Elemente auf jeder Seite verlängert und durch Eindringen in eine Ausnehmung (17, 18), die vis à vis in der Seite des zum vorigen Element gegenüberliegenden Elements vorgesehen ist, bei dieser Bewegung mitwirkt, wobei diese Einrichtung in Richtung dieser Bewegung vom Paar Zahn-Fenster ausreichend entfernt ist, um eine Fixierung der Borde im Bereich ihrer gesamten Höhe zu gestatten.

Fig. 1

Fig. 2

Fig. 3

Fig. 4

Fig. 5